# EUROPEAN PATENT APPLICATION

(11) **EP 4 832 199 A1**
(43) Date of publication of application: **28.10.2026**
(21) Application number: 25878781.1
(22) Date of filing: 12.08.2025
(51) Int. Cl.: H01M 50/244, B64U 50/37, B64U 80/25, B60L 53/16, H01M 50/264, H01M 50/249

(54) **UNMANNED AERIAL VEHICLE BATTERY ASSEMBLY, UNMANNED AERIAL VEHICLE, AND UNMANNED AERIAL VEHICLE CHARGING SYSTEM**

(30) Priority: 14.10.2024 CN 202411432813; 16.10.2024 CN 202411447596
(71) Applicant: Chery Automobile Co., Ltd., Wuhu, Anhui 241006 (CN); Wuhu Automobile Advanced Technology Institute, Wuhu, Anhui 241006 (CN); Nanjing Wood Ant Intelligent Technology Co., Ltd., Nanjing, Jiangsu 210019 (CN)
(72) Inventor: SHENG, Wenqiang, Wuhu, Anhui 241006 (CN); HUANG, Yong, Wuhu, Anhui 241006 (CN); TONG, Jianjun, Wuhu, Anhui 241006 (CN)
(74) Representative: Adamson Jones
(86) International application number: PCT/CN2025/114098
(87) International publication number: WO 2026/081640

(57) **Abstract**

The present application relates to the technical field of vehicle-mounted unmanned aerial vehicles, and discloses an unmanned aerial vehicle battery assembly, an unmanned aerial vehicle, and an unmanned aerial vehicle charging system. The unmanned aerial vehicle battery assembly comprises a housing, a panel, a charging interface, a power supply interface, and a pair of snap-fit structures. The panel is located at a first end of the housing. The charging interface is located on the panel. The charging interface is adapted to be connected to a charging plug. The power supply interface is disposed on the housing and faces away from the panel. The pair of snap-fit structures are located on two sides of the housing respectively. A battery compartment of the unmanned aerial vehicle is provided with, at corresponding positions, slots matching the snap-fit structures. When the unmanned aerial vehicle battery assembly is pushed into the battery compartment of the unmanned aerial vehicle, the pair of snap-fit structures are pressed by side walls of the battery compartment to deform, the pushing of the unmanned aerial vehicle battery assembly is continued, and the pair of snap-fit structures can extend, under the action of their own stress, into the slots of the battery compartment and match the slots for locking. The snap-fit structures make a battery of an unmanned aerial vehicle easy to install and remove, allowing for adaptation to a variety of charging environments, thereby improving user experience.

## Description

### VEHICLE CHARGING SYSTEM

The present disclosure claims priority to Chinese Patent Application No. 202411432813.8, filed on October 14, 2024, and entitled "UNMANNED AERIAL VEHICLE BATTERY ASSEMBLY, UNMANNED AERIAL VEHICLE AND UNMANNED AERIAL VEHICLE CHARGING SYSTEM," and also claims priority to Chinese Patent Application No. 202411447596.X, filed on October 16, 2024, and entitled "UNMANNED AERIAL VEHICLE BATTERY ASSEMBLY, UNMANNED AERIAL VEHICLE AND UNMANNED AERIAL VEHICLE CHARGING SYSTEM," the entire contents of which are incorporated herein by reference.

### TECHNICAL FIELD

The present disclosure relates to the technical field of vehicle-mounted unmanned aerial vehicles (UAVs), and particularly relates to a UAV battery assembly, a UAV, and a UAV charging system.

### BACKGROUND

UAVs are widely used flight devices at present, and their forms, structures and functions are constantly developing, with applicable scenarios also increasing. The endurance capability of UAVs has become an important factor affecting the user experience, and therefore the design of UAV charging devices is of great importance.

In the related art, wired charging is generally used to charge UAVs. Compared to wireless charging, wired charging can improve the charging efficiency and the charging safety of UAVs. A UAV battery and a UAV body may be fixed together by bolt connection. When charging the UAV, a user generally needs to detach the UAV battery and place it on a charging base for charging.

However, such a connection manner between the UAV battery and the UAV body makes it difficult for the user to detach the UAV battery, resulting in a poor user experience.

### SUMMARY

The present disclosure provides an unmanned aerial vehicle (UAV) battery assembly, a UAV, and a UAV charging system, which can solve the problem that UAV batteries are not easy to disassemble. The technical solution is as follows.

In an aspect, a UAV battery assembly is provided, which includes a housing, a panel, a charging interface, a power supply interface, and a pair of snap-fit structures. The panel is disposed at a first end of the housing, and the charging interface is disposed on the panel and is configured to be connected to a charging plug. The power supply interface is disposed on the housing and on a side away from the panel. The pair of snap-fit structures are disposed on opposite sides of the housing respectively, and are configured to form a detachable snap-fit connection with a battery compartment of the UAV.

Optionally, each of the pair of snap-fit structures includes an actuating portion, a connection portion, and a hook portion that are connected to each other in sequence. The actuating portion is closer to the first end of the housing than the hook portion, and the actuating portion protrudes outward relative to the hook portion.

Optionally, a pair of snap-fit blocking portions in a one-to-one positional correspondence with the hook portions of the pair of snap-fit structures are further disposed on the opposite sides of the housing. Each of the snap-fit blocking portions is disposed on an inner side of a corresponding hook portion, and in response to the pair of snap-fit structures being in a released state, the snap-fit blocking portions are spaced apart from the hook portions by a gap.

Optionally, the housing includes a protrusion abutting the panel, and the power supply interface is disposed on a surface of the protrusion away from the panel.

Optionally, the housing is provided with a guide groove extending from the first end of the housing to a second end of the housing, where a guide opening of the guide groove is disposed at the second end of the housing, and the first end and the second end of the housing are opposite to each other.

Optionally, the guide groove is disposed on a bottom surface of the housing, where the bottom surface is between the opposite sides of the housing, and the bottom surface is opposite to a surface where the power supply interface is located.

In another aspect, a UAV is provided, which includes a UAV body and any battery assembly described above. A power receiving interface is disposed in the UAV body; and a battery compartment is disposed in the UAV body, a recess being defined in each of two opposite inner walls of the battery compartment, and the recesses being in a one-to-one correspondence with the pair of snap-fit structures, such that the UAV battery assembly is detachably mounted to the UAV; where the power receiving interface is configured to mate with the power supply interface.

Optionally, an abutment portion extends downward from a top wall of the battery compartment, the abutment portion is spaced apart from an entrance end of the battery compartment, and the power receiving interface is disposed on a surface of the abutment portion facing the entrance end.

Optionally, a guide rib is disposed on a bottom surface of the battery compartment, where an extension direction of the guide rib is the same as an insertion direction of the battery assembly.

In another aspect, a UAV charging system is further provided, which includes the landing pad and any UAV as described above. The landing pad includes a centering mechanism, and the centering mechanism includes a centering limiting rod and a charging plug. The charging plug is mounted on the centering limiting rod and configured to dock with the charging interface where necessary.

Optionally, the centering mechanism includes four centering limiting rods that are arranged in pairs, the centering limiting rods in each pair being opposite to each other. In a direction perpendicular to the landing pad, two opposite centering limiting rods are at a same distance from the landing pad, and two adjacent centering limiting rods are at different distances from the landing pad.

Optionally, the UAV charging system further includes a limiting mechanism configured to be detachably connected to the UAV.

The beneficial effects brought by the technical solution provided in the present disclosure include at least the following beneficial effects. The UAV battery assembly includes a housing, a panel, a charging interface, a power supply interface, and a pair of snap-fit structures. The UAV battery is disposed inside the housing, and the pair of snap-fit structures are disposed on opposite sides of the housing respectively. The UAV battery compartment is provided with recesses, which match the snap-fit structures, at corresponding positions. When the battery is mounted onto the UAV, the housing of the UAV battery assembly needs to be pushed into the UAV battery compartment. The pair of snap-fit structures of the housing are compressed by the side walls of the battery compartment to deform toward the housing. As the housing is pushed further, the pair of snap-fit structures can extend into the recesses of the battery compartment under the action of their own stress to engage and lock with the recesses, thereby securing the UAV battery to the battery compartment. In this way, when the UAV is idle, the entire UAV can enter a UAV hangar for charging. When the battery needs to be removed, the snap-fit structures are pressed to disengage from the recesses, and simultaneously the housing is dragged out of the battery compartment to detach the battery. The battery may then be connected to a portable charging plug for individual charging. This snap-fit structure facilitates the mounting and removal of the UAV battery, enabling adaptation to various charging environments, thereby enhancing the user experience.

### BRIEF DESCRIPTION OF DRAWINGS

For clearer descriptions of the technical solutions in the embodiments of the present disclosure, the following briefly describes the accompanying drawings required for describing the embodiments. Apparently, the accompanying drawings in the following description illustrate merely some embodiments of the present disclosure, and those of ordinary skill in the art can still derive other drawings from these accompanying drawings without creative efforts.
FIG. 1 is a schematic structural diagram of a UAV battery assembly according to some embodiments of the present disclosure;
FIG. 2 is another schematic structural diagram of a UAV battery assembly according to some embodiments of the present disclosure;
FIG. 3 is a structural sectional view of a UAV battery assembly according to some embodiments of the present disclosure;
FIG. 4 is a structural bottom view of a UAV battery assembly according to some embodiments of the present disclosure;
FIG. 5 is a schematic structural diagram of a UAV according to some embodiments of the present disclosure;
FIG. 6 is a schematic structural diagram of a UAV body according to some embodiments of the present disclosure;
FIG. 7 is another schematic structural diagram of a UAV according to some embodiments of the present disclosure;
FIG. 8 is a schematic diagram of a UAV charging system according to some embodiments of the present disclosure;
FIG. 9 is a schematic diagram of a UAV landing on a landing pad according to some embodiments of the present disclosure; and
FIG. 10 is a schematic structural diagram of a charging plug according to some embodiments of the present disclosure.

### DETAILED DESCRIPTION

For clearer descriptions of the objectives, technical solutions and advantages of the present disclosure, embodiments of the present disclosure are further described in detail below with reference to the accompanying drawings.

Some embodiments of the present disclosure provide a UAV battery assembly that can solve the problem that a UAV battery is difficult to detach.

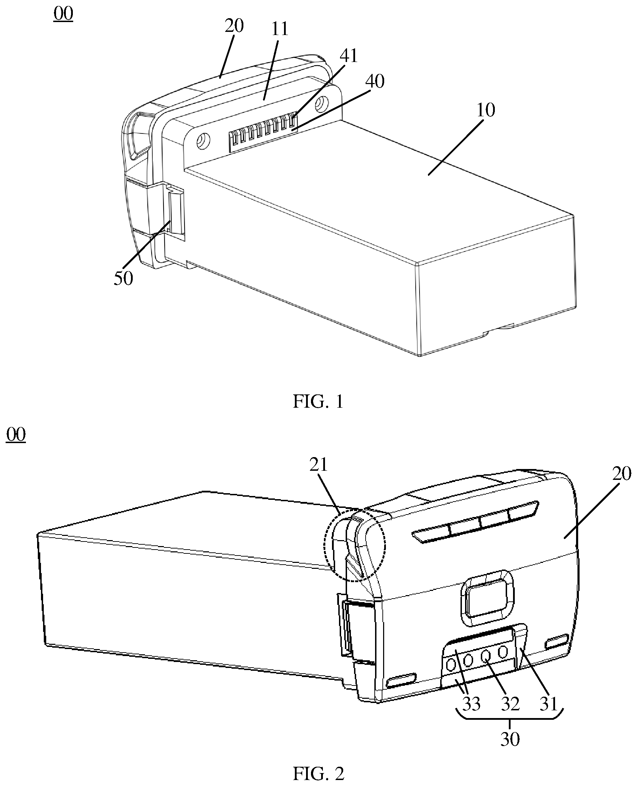

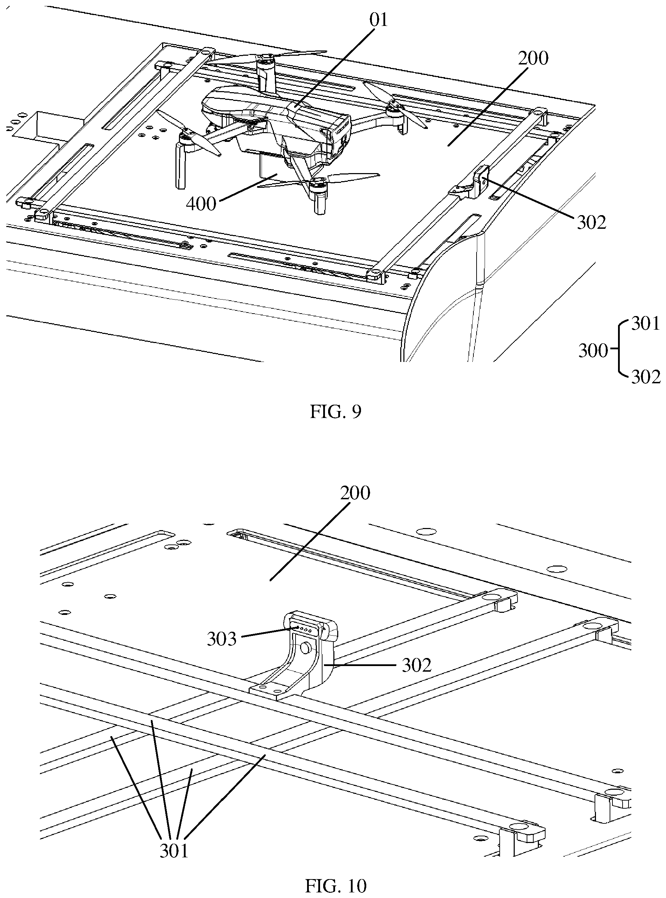

Referring to FIGS. 1 and 2, a UAV battery assembly 00 includes a housing 10, a panel 20, a charging interface 30, a power supply interface 40, and a pair of snap-fit structures 50. A UAV battery is disposed inside the housing 10, and the panel 20 is disposed at a first end of the housing 10 and is connected to the UAV battery. The charging interface 30 is disposed on the panel 20 and disposed on the side of the panel 20 facing away from the housing 10. This charging interface 30 is configured to be connected to a charging socket. Referring to FIG. 10, in the case that the charging socket is a charging plug 302, the charging interface 30 may be connected to the charging plug 302, thereby charging the UAV battery.

As shown in FIG. 2, the charging interface 30 may include a recessed area 31 and a plurality of interface touch points 32 within the recessed area 31. Referring to FIG. 10, the charging plug 302 has a plurality of plug touch points 303 corresponding to the plurality of interface touch points 32. When the UAV 01 needs to be charged, the recessed area 31 of the charging interface 30 can be coupled with the charging plug 302, and the plurality of interface touch points 32 of the charging interface 30 are electrically connected to the plurality of plug touch points 303 of the charging plug 302 in one-to-one correspondence, while the charging plug 302 is connected to a power source, thereby charging the UAV 01.

Referring to FIG. 2, the charging interface 30 may further include two magnetic members 33, which may be rectangular and disposed on two sides of the plurality of interface touch points 32, respectively. The charging plug 302 has two corresponding magnetic members, and when the charging interface 30 is coupled with the charging plug 302, the two magnetic members 33 can be attracted to the two magnetic members of the charging plug 302, so that the connection between the charging interface 30 and the charging plug 302 is tight. Therefore, the interface touch points 32 and the plug touch points 303 can achieve good and stable contact, thereby reducing the problem of poor contact during charging.

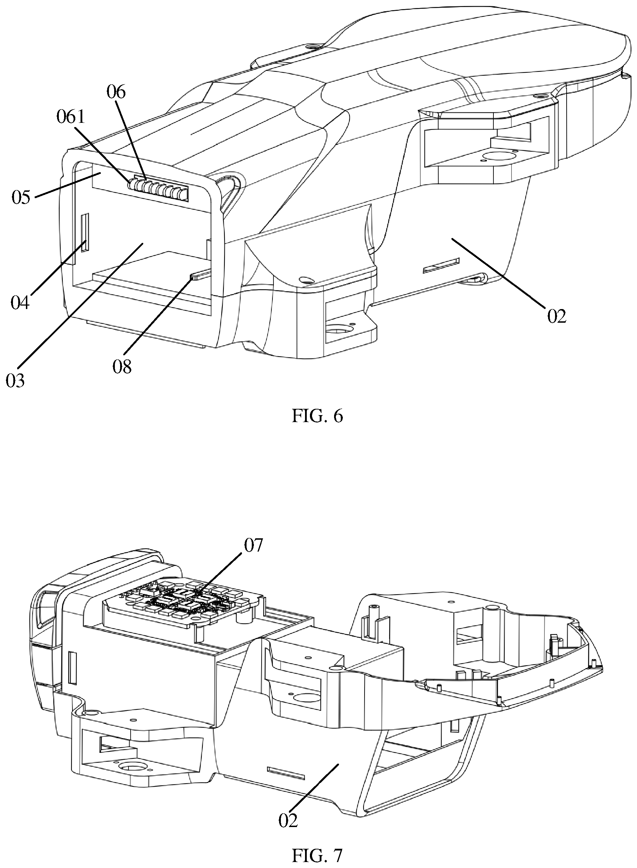

As shown in FIG. 1, the power supply interface 40 may be disposed on the housing 10, and on a side that is away from the panel 20. The power supply interface 40 includes a plurality of sockets 41. Referring to FIG. 6, the UAV 01 includes a power receiving interface 06 corresponding to the power supply interface 40, and the power receiving interface 06 includes a plurality of blades 061. When the UAV 01 needs power, the power receiving interface 06 is connected to the power supply interface 40, and the plurality of blades 061 of the power receiving interface 06 are inserted into the plurality of sockets 41 of the power supply interface 40 in one-to-one correspondence, thereby supplying power to the UAV 01.

Referring to FIG. 1, the housing 10 may further include a pair of snap-fit structures 50 on opposite sides of the housing 10 respectively. Referring to FIG. 6, side walls of a battery compartment 03 of the UAV 01 have recesses 04 at corresponding positions. When the housing 10 is pushed into the battery compartment 03, the two snap-fit structures 50 are compressed to undergo deformation. As the housing 10 is pushed further, the two snap-fit structures 50 can extend into the recesses 04 under the action of their own stress to engage and lock with the recesses 04, thereby securing the UAV battery to the battery compartment 03. When the battery needs to be removed, the snap-fit structures 50 are pressed to disengage from the recesses 04, and simultaneously the housing 10 can be dragged out of the battery compartment 03.

In summary, the UAV battery assembly provided in some embodiments of the present disclosure includes a housing, a panel, a charging interface, a power supply interface, and a pair of snap-fit structures. The UAV battery is disposed inside the housing, and the two snap-fit structures are disposed on opposite sides of the housing respectively. The UAV battery compartment is provided with recesses, which match the snap-fit structures, at corresponding positions. When the battery is mounted onto the UAV, the housing of the UAV battery assembly needs to be pushed into the UAV battery compartment. The two snap-fit structures of the housing are compressed by the side walls of the battery compartment to deform toward the housing. As the housing is pushed further, the two snap-fit structures can extend into the recesses of the battery compartment under the action of their own stress to engage and lock with the recesses, thereby securing the UAV battery to the battery compartment. In this way, when the UAV is idle, the entire UAV can enter a UAV hangar for charging. When the battery needs to be removed, the snap-fit structures are pressed to disengage from the recesses, and simultaneously the housing is dragged out of the battery compartment to detach the battery. The battery may then be connected to a portable charging plug for individual charging. This snap-fit structure facilitates the mounting and removal of the UAV battery, enabling adaptation to various charging environments, thereby enhancing the user experience.

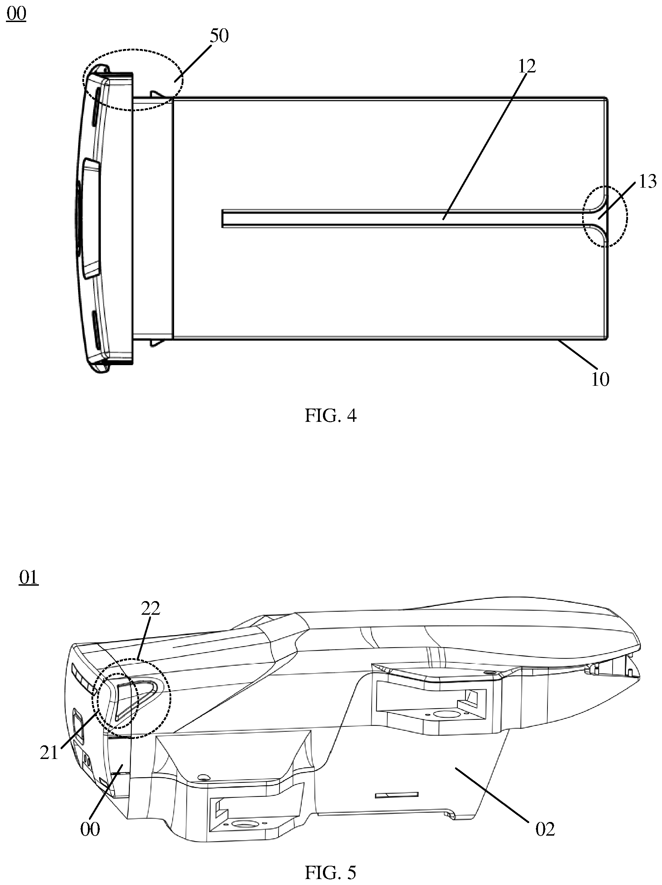

As shown in FIG. 2, the panel 20 of the UAV battery assembly 00 may further include a pair of recessed structures 21, which are respectively located at opposite positions on the opposite sides of the panel 20. Optionally, the two recessed structures 21 may be located at two adjacent rounded corners of the panel 20. Correspondingly, a UAV body is also provided with two recessed structures at corresponding positions on opposite sides. Referring to FIG. 5, the side surfaces of the two recessed structures on the UAV body 02 may abut against the side surfaces of the two recessed structures 21 of the UAV battery assembly 00, so that these two recessed structures may combine with the two recessed structures 21 of the UAV battery assembly 00 to form two new recessed structures 22, which can provide guidance and limiting when the UAV battery assembly 00 is inserted into the UAV body 02. In addition, the two newly formed recessed structures 22 may respectively mate with two fastening structures that are shape-matched to them, thereby further ensuring a secure connection between the UAV battery assembly 00 and the UAV body 02.

As shown in FIG. 1, it should be noted that the snap-fit structure 50 is spaced apart from the housing 10, and the end of the snap-fit structure 50 away from the housing 10 may be connected to the panel 20, thus the snap-fit structure 50 has a certain degree of elasticity. When the snap-fit structure 50 is pressed or compressed by an external force, it can deform toward the housing 10. In addition, the snap-fit structure 50 and the panel 20 may be manufactured by an integral molding process, so that the structure of the snap-fit structure 50 is simple, and the manufacturing process is also simple, thereby reducing production costs.

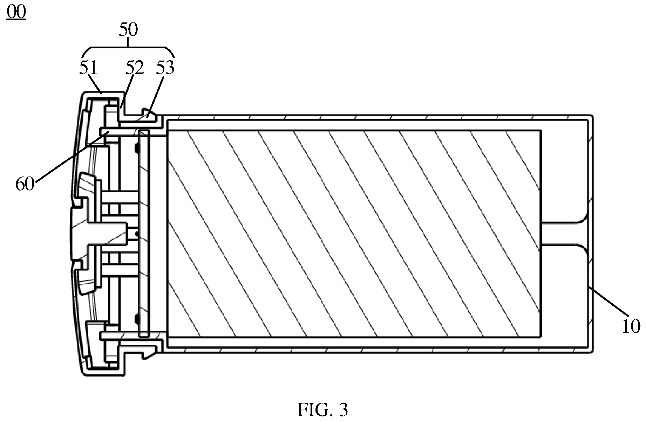

Referring to FIG. 3, the snap-fit structure 50 includes an actuating portion 51, a connection portion 52, and a hook portion 53. The connection portion 52 is used to connect the actuating portion 51 to the hook portion 53. The actuating portion 51 protrudes outward relative to the hook portion 53, and the actuating portion 51 is closer to the first end of the housing 10 than the hook portion 53. The panel 20 is located at the first end of the housing 10, that is, the actuating portion 51 is closer to the panel 20 than the hook portion 53.

The actuating portion 51 within the snap-fit structure 50 may be connected to the panel 20, while both the connection portion 52 and the hook portion 53 within the snap-fit structure 50 are spaced apart from the panel 20 and are also spaced apart from the housing 10, thereby providing the snap-fit structure 50 with a certain degree of elasticity.

The end of the actuating portion 51 away from the hook portion 53 may be connected to the panel 20, and the actuating portion 51 may be parallel to a side wall of the panel 20 and spaced apart from the side wall of the panel 20. In this way, pressing the actuating portion 51 can cause the actuating portion 51 to undergo inward deformation.

One end of the connection portion 52 may be connected to the end of the actuating portion 51 close to the hook portion 53, and the other end thereof may be connected to the end of the hook portion 53 close to the actuating portion 51. The connection portion 52 may be parallel to the surface of the panel 20 close to the housing 10, and the connection portion 52 is spaced apart from the surface of the panel 20 close to the housing 10. In this way, pressing the actuating portion 51 can drive the connection portion 52 to move toward the actuating portion 51.

The end of the hook portion 53 close to the actuating portion 51 is connected to the connection portion 52, and the hook portion 53 may be parallel to the side wall of the housing 10 and spaced apart from the side wall of the housing 10. In this way, pressing the actuating portion 51 can drive the hook portion 53 to deform toward the housing 10 through the connection portion 52.

The end of the hook portion 53 away from the actuating portion 51 has a hook, and the surface of the hook away from the actuating portion 51 forms a certain angle with the side wall of the housing 10, and the surface of the hook away from the actuating portion 51 is inclined toward the panel 20, so as to facilitate the entry of the hook into the battery compartment 03.

When the UAV battery assembly 00 is mounted onto the UAV 01, the housing 10 needs to be pushed into the battery compartment 03 of the UAV 01. During the insertion process, when the hook portion 53 of the snap-fit structure 50 come into contact with the side wall of the battery compartment 03, the hook portion 53 is compressed by the side wall of the battery compartment 03 and deforms toward the housing 10, thereby driving the connection portion 52 and the actuating portion 51 to deform correspondingly. As the housing 10 is further pushed, the hook portion 53, under the action of its own stress, extends into the recess 04 in the side wall of the battery compartment 03, and the hook portion 53 engages and locks with the recess 04, thereby securing the battery of the UAV 01 to the battery compartment 03. At this point, the hook portion 53 is no longer subjected to compression, and thus the hook portion 53, connection portion 52, and actuating portion 51 are all in an undeformed state.

In addition, when the battery needs to be detached from the UAV 01, the actuating portion 51 of the snap-fit structure 50 may be pressed to cause the actuating portion 51 to deform inwardly, thereby driving the hook portion 53 to move toward the housing 10 through the connection portion 52, so that the hook portion 53 is disengaged from the recess 04 in the side wall of the battery compartment 03. In this way, the user can simply drag the housing 10 out of the battery compartment 03. The design of the snap-fit structure 50 facilitates the mounting and removal of the battery of the UAV 01, enabling adaptation to various charging environments, thereby enhancing the user experience.

When the snap-fit structure 50 is pressed or compressed by the side wall of the battery compartment 03 of the UAV 01, the hook portion 53 deforms toward the housing 10. If the pressure applied is large and causes a significant deformation of the hook portion 53, the hook portion 53 may break, or the actuating portion 51 may deform significantly and break. Referring to FIG. 3, the housing 10 of the UAV battery assembly 00 provided in some embodiments of the present disclosure is provided with a pair of snap-fit blocking portions 60 to protect the snap-fit structures 50.

The two snap-fit blocking portions 60 are disposed on the opposite sides of the housing 10 and are connected to side walls of the housing 10. The snap-fit blocking portions 60 may be parallel to the side walls of the housing 10, and the snap-fit blocking portions 60 are in a one-to-one positional correspondence with the hook portions 53 of the snap-fit structure 50. The two snap-fit blocking portions 60 are respectively disposed on the inner sides of the two hook portions 53, that is, the snap-fit blocking portions 60 are closer to the housing 10 than the hook portions 53, respectively. When the snap-fit structure 50 is in a released state, a gap is formed between the hook portion 53 and the snap-fit blocking portion 60, and at this time, the snap-fit blocking portion 60 does not affect the hook portion 53. When the battery needs to be pressed into the battery compartment 03 of the UAV 01, and the hook portion 53 of the snap-fit structure 50 is compressed by the side wall of the battery compartment 03 and deforms to a large extent toward the housing 10, the hook portion 53 comes into contact with the snap-fit blocking portions 60, and the snap-fit blocking portion 60 can prevent further inward deformation and breakage of the hook portion 53. Similarly, when the battery needs to be removed from the battery compartment 03, the user needs to press the actuating portions 51 of the snap-fit structures 50, so that the hook portions 53 is driven to deform toward the housing 10 through the connection portion 52. If the user applies a large pressure, the hook portion 53 deforms to a large extent, and the hook portion 53 comes into contact with the snap-fit blocking portion 60, thereby preventing further inward deformation and breakage of the hook portion 5.

Referring to FIG. 1, the housing 10 of the UAV battery assembly 00 may include a protrusion 11 abutting the panel 20, and the orthographic projection area of the protrusion 11 on the housing 10 is located within the orthographic projection area of the panel 20 on the housing 10. The UAV battery assembly 00 further includes a power supply interface 40, which is disposed on the surface of the protrusion 11 away from the panel 20. The power supply interface 40 includes a plurality of sockets 41 arranged in a row. Referring to FIG. 6, the UAV body 02 includes a power receiving interface 06 corresponding to the power supply interface 40. The power receiving interface 06 includes a plurality of blades 061 that are shape-matched to the plurality of sockets 41. The power receiving interface 06 is configured to be connected to the power supply interface 40, and the plurality of blades 061 of the power receiving interface 06 are inserted into the plurality of sockets 41 of the power supply interface 40 in one-to-one correspondence, thereby supplying power to the UAV 01.

As shown in FIG. 4, the housing 10 of the UAV battery assembly 00 is provided with a guide groove 12, which extends from the first end of the housing 10 to a second end of the housing 10. The first end of the housing 10 is the end where the panel 20 is located, and the second end of the housing 10 is the end opposite to the end where the panel 20 is located. Referring to FIG. 6, a guide rib 08 is provided at a corresponding position in the side wall of the battery compartment 03 of the UAV 01, the guide rib 08 mates with the guide groove 12 in terms of shape and extends toward the interior of the battery compartment 03. When the UAV battery assembly 00 needs to be inserted into the battery compartment 03, the second end of the housing 10 enters the battery compartment 03 before the first end. The guide groove 12 has a guide opening 13 at the second end of the housing 10, facilitating the insertion of the guide rib 08 into the guide groove 12. The guide groove 12 provides effective guiding and limiting for the housing 10. As an increasing portion of the guide rib 08 extends into the guide groove 12, the housing 10 continuously advances toward the interior of the battery compartment 03 along the direction in which the guide rib 08 extends, until the snap-fit structure 50 on the housing 10 engages and locks with the recess 04 in the side wall of the battery compartment 03, thereby securing the battery in the battery compartment 03.

If the guide groove 12 of the housing 10 and the power supply interface 40 are disposed on the same side of the housing 10, it is not convenient to observe the docking of the power supply interface with the power receiving interface 06 of the UAV 01 when the guide groove 12 and the guide rib 08 cooperate to guide the housing 10 to advance into the battery compartment 03.

As shown in FIG. 4, in some embodiments of the present disclosure, the guide groove 12 of the housing 10 is disposed on the bottom surface of the housing 10, and the bottom surface of the housing 10 is between two side surfaces of the housing 10, that is, the guide groove 12 is disposed on the side of the housing 10 close to the ground. The power supply interface 40 is disposed on the top surface of the housing 10, which is disposed opposite to the bottom surface. In other words, the guide groove 12 and the power supply interface 40 are disposed opposite to each other. In this way, during the process in which the guide groove 12 guides the housing 10 into the battery compartment 03, it is convenient for the user to observe the docking between the power supply interface 40 and the power receiving interface 06 that are disposed on the top surface of the housing 10.

In summary, some embodiments of the present disclosure provide a UAV battery assembly, including a housing, a panel, a charging interface, a power supply interface, and a pair of snap-fit structures. The UAV battery is disposed inside the housing, and the two snap-fit structures are disposed on opposite sides of the housing respectively. When the battery is mounted on the UAV, the housing of the UAV battery assembly needs to be pushed into the battery compartment of the UAV, and the hook portions of the two snap-fit structures are pressed by the side walls of the battery compartment and deform toward the housing. At the same time, corresponding snap-fit blocking portions are provided on the inner sides of the hook portions to prevent the hook portions from deforming excessively and breaking. As the housing is pushed further, the hook portions can extend into the recesses in the side walls of the battery compartment under the action of their own stress to engage and lock with the recesses, thereby securing the UAV battery to the battery compartment. In this way, when the UAV is idle, the entire UAV can enter the UAV hangar for charging. When the battery needs to be removed, the actuating portions of the snap-fit structures are pressed, thereby driving the hook portions to deform inward to disengage from the recesses. At the same time, the housing is dragged out of the battery compartment to detach the battery. The battery may then be connected to a portable charging plug for individual charging. This snap-fit structure facilitates the mounting and removal of the UAV battery, enabling adaptation to various charging environments, thereby enhancing the user experience. Additionally, the bottom surface of the housing is provided with a guide groove, which guides and limits the insertion of the housing into the battery compartment. The top surface of the housing is provided with a power supply interface opposite the guide groove, facilitating the observation of the docking between the power supply interface and the power receiving interface of the UAV.

Referring to FIG. 5, some embodiments of the present disclosure provide a UAV 01, which includes a UAV body 02 and any UAV battery assembly 00 mentioned above, where the UAV battery assembly 00 is configured to be connected to the UAV body 02. As shown in FIG. 6, the UAV body 02 includes a battery compartment 03, and each of two opposite inner walls of the battery compartment 03 is provided with a recess 04, the recesses 04 are in one-to-one correspondence with the snap-fit structures 50 of the UAV battery assembly 00. The hook portion 53 of the snap-fit structure 50 can extend into the recess 04 to engage and lock with the recess 04, thereby achieving the connection between the UAV battery assembly 00 and the UAV body 02. The engagement between the snap-fit structure 50 and the recess 04 facilitates the mounting and removal of the battery of the UAV 01, enabling adaptation to various charging environments, thereby enhancing the user experience.

The UAV body 02 is provided with a power receiving interface 06, which is configured to mate with the power supply interface 40 of the UAV battery assembly 00. Referring to FIG. 6, the top wall of the battery compartment 03 of the UAV body 02 is provided with an abutment portion 05 extending downward from the top wall, the abutment portion 05 is spaced from the entrance end of the battery compartment 03 by a certain distance. That is, the abutment portion 05 is located inside the battery compartment 03, and the power receiving interface 06 is disposed on the surface of the snap-fit blocking portion 05 facing the entrance end of the battery compartment 03. In this way, the power receiving interface 06 is not exposed outside, but is located inside the battery compartment 03, thereby effectively protecting the power receiving interface 06. The power receiving interface 06 includes a plurality of blades 061 arranged in a row, and the power receiving interface 06 are configured to mate with the power supply interface 40 of the UAV battery assembly 00. The plurality of blades 061 of the power receiving interface 06 can be inserted into a plurality of sockets 41 of the power supply interface 40 in a one-to-one correspondence, thereby supplying power to the UAV 01.

Referring to FIGS. 1 and 6, the housing 10 of the UAV battery assembly 00 provided in some embodiments of the present disclosure includes a protrusion 11 abutting the panel 20. The orthographic projection area of the protrusion 11 on the housing 10 is located within the orthographic projection area of the panel 20 on the housing 10. The power supply interface 40 is disposed on the protrusion 11. Correspondingly, the abutment portion 05 of the UAV body 02 is located inside the battery compartment 03, so that when the UAV battery assembly 00 is inserted into the battery compartment 03, the protrusion 11 can enter the battery compartment 03 and come into contact with the abutment portion 05. The power supply interface 40 on the protrusion 11 can be docked with the power receiving interface 06 on the abutment portion 05. The panel 20 of the UAV battery assembly 00 does not enter the battery compartment 03, but is docked with the housing of the battery compartment 03, so as to enclose the battery compartment 03 and the battery within the UAV 01, thereby effectively protecting the battery and the docking between the power supply interface 40 and the power receiving interface 06.

As shown in FIG. 7, the UAV body 02 is provided with an electronic speed controller 07, which is connected to the motor of UAV 01 and the power receiving interface 06. The power receiving interface 06 is connected to the power supply interface 40 of the UAV battery assembly 00, so that the electronic speed regulator 07 can draw power from the battery of the UAV battery assembly 00 to provide the necessary power to the motor of UAV 01 and control the output power of the motor, thereby powering the entire UAV 01. Furthermore, the electronic speed regulator 07 can also control the rotational speed and the direction of the motor, thereby meeting the flight requirements of UAV 01 and enhancing the flight performance.

Referring to FIG. 6, the bottom surface of the battery compartment 03 of the UAV body 02 is provided with a guide rib 08, whose extension direction is the same as the insertion direction of the UAV battery assembly 00. The bottom surface of the housing 10 of the UAV battery assembly 00 is provided with a guide groove 12 mating with the guide rib 08 in terms of shape. When the UAV battery assembly 00 is inserted into the battery compartment 03, the guide rib 08 can extend into the guide groove 12, so that the UAV battery assembly 00 can be inserted into the battery compartment 03 along the extension direction of the guide rib 08, thereby providing effective guiding and limiting functions.

In summary, some embodiments of the present disclosure provide a UAV, including a UAV body and any UAV battery assembly according to the embodiments of the present disclosure. Each of two opposite inner walls of the battery compartment of the UAV body is provided with a recess that can engage and lock with a pair of snap-fit structures of the UAV battery assembly, thereby facilitating the mounting and removal of the UAV battery. This design can enable adaptation to various charging environments and enhance the user experience. The UAV body is provided with a power receiving interface that can be docked with the power supply interface of the UAV battery assembly, thereby supplying power to the entire UAV. Additionally, the bottom surface of the battery compartment of the UAV body is provided with a guide rib that can extend into the guide groove of the UAV battery assembly, so that the UAV battery assembly can be inserted into the battery compartment along the extension direction of the guide rib, thereby providing effective guidance and limiting functions.

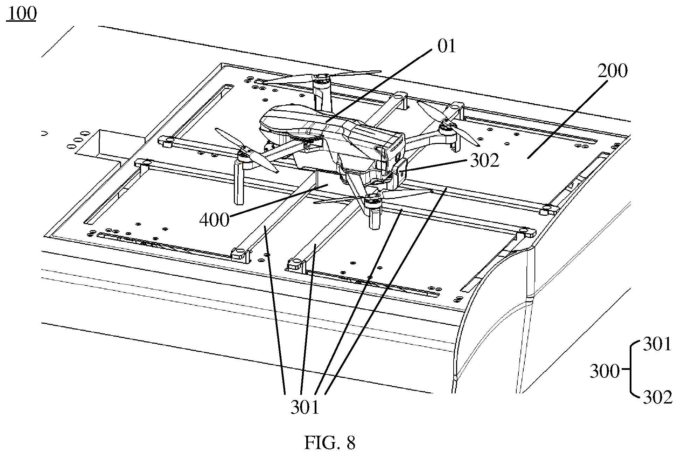

Referring to FIG. 8, some embodiments of the present disclosure further provide a UAV charging system 100, including a landing pad 200 and any aforementioned UAVs 01. The landing pad 200 is disposed in a UAV hangar. When the hangar is opened, the UAV 01 can enter the hangar and land on the landing pad 200 for parking.

The landing pad 200 may include a centering mechanism 300, which may include a plurality of centering limiting rods 301. As shown in FIG. 9, the centering mechanism 300 may include four centering limiting rods 301, which are arranged in two pairs and located at the four boundaries of the landing pad 200, with the centering limiting rods in each pair are opposite to each other. Both ends of each centering limiting rod 301 are respectively connected to corresponding control rods, that is, each centering limiting rod 301 corresponds to a pair of control rods. Each control rod has its own track on the landing pad 200, and the control rods are movable in their respective tracks. In the direction perpendicular to the landing pad 200, the two opposite centering limiting rods 301 are at the same distance from the landing pad 200, while the two centering limiting rods 301 not opposite to each other are at different distances from the landing pad 200. That is, the two adjacent centering limiting rods 301 are at different distances from the landing pad 200, thereby avoiding collision between the two centering limiting rods 301 not opposite to each other during a centering process. The tracks of the pair of control rods corresponding to each centering limiting rod 301 have the same extension direction and the same length. The extension direction of the track is the length direction of the track, and the extension direction of the track is perpendicular to the length direction of the centering limiting rod 301 connected to this track. The two tracks are disposed on opposite sides of the landing pad 200. Initially, each control rod is located at an end of its track close to the boundary of the landing pad 200.

As shown in FIG. 9, when the UAV 01 lands on the landing pad 200, it is positioned within the rectangle defined by the four centering limiting rods 301. Upon activating the centering mechanism 300, each pair of control rods moves along the extension direction of the corresponding track, thereby driving the centering limiting rods 301 connected thereto to move toward the center of the landing pad 200. Under the joint action of the four centering limiting rods 301, the UAV 01 is restricted to the center of the landing pad 200, thereby achieving centering. At this point, the centering limiting rods 301 stop moving, clamping the UAV 01 to prevent bumping during the transportation. As shown in FIG. 8, for the UAV 01, the front and rear centering limiting rods 301 prevent the UAV 01 from bumping forward and backward, while the left and right centering limiting rods 301 prevent it from bumping left and right.

Referring to FIG. 8, the UAV charging system 100 may further include a limiting mechanism 400, which is configured to be connected between the UAV 01 and the landing pad 200. The top of the limiting mechanism 400 is provided with a plurality of snap-fit structures, and the bottom of the UAV 01 is provided with a plurality of recesses corresponding to the snap-fit structures. The snap-fit structures can be inserted into the recesses, thereby allowing the limiting mechanism 400 to be mounted on the bottom of the UAV 01. When the UAV 01 needs to be parked in the UAV hangar, the UAV 01 and the limiting mechanism 400 descends together onto the landing pad 200 of the hangar. Under the action of the centering mechanism 300, the UAV 01 and the limiting mechanism 400 are restricted at the center of the landing pad 200. A side edge of the bottom portion of the limiting mechanism 400 is provided with a tapered flange, which is pressed under the centering limiting rod 301 during the centering process, thereby securing the limiting mechanism 400 and the UAV 01 on the landing pad 200 and preventing the UAV 01 from bouncing up and down during the transportation.

Referring to FIG. 9, the centering mechanism 300 of the UAV charging system 100 further includes a charging plug 302, which may be located at the center of a centering limiting rod 301. The charging plug 302 is opposite to the side of the UAV battery assembly 00 of the UAV 01 where a charging interface 30 is arranged. As shown in FIG. 10, the charging plug 302 has a plurality of plug touch points 303, and the charging interface 30 of the UAV battery assembly 00 has a plurality of interface touch points 32. When the centering mechanism 300 is activated, the charging plug 302 on the centering limiting rod 301 moves toward the center of the landing pad 200 together with the centering limiting rod 301. After the UAV 01 is centered, the charging plug 302 is docked with the charging interface 30 of the UAV 01, and the plurality of plug touch points 303 of the charging plug 302 are electrically connected in one-to-one correspondence with the plurality of interface touch points 32 of the charging interface 30. At the same time, the charging plug 302 is connected to a power source, thereby enabling the charging of the UAV 01. Moreover, since the UAV 01 is restricted to the center of the landing pad 200 by the centering mechanism 300, and the charging plug 302 is connected at the centering limiting rod 301, the UAV 01 and the charging plug 302 can avoid bumping during the transportation, thereby achieving a tight and stable connection between the UAV 01 and the charging plug 302, and ensuring reliable charging.

The UAV hangar is provided with a communication module, such as a wireless network communication module or a Bluetooth communication module. The charging status of UAV 01 on the landing pad 200 in the UAV hangar may be transmitted to a mobile phone or a vehicle-mounted device through the communication module, thereby allowing users to monitor the charging status of UAV 01 in real time.

In summary, some embodiments of the present disclosure provide a UAV charging system, which includes a landing pad and a centering mechanism. This system allows a UAV to land and park on the landing pad of the UAV hangar when the UAV is idle. Moreover, the centering mechanism can center the UAV and restrain it at the center of the landing pad, thereby preventing bumping during transportation. Additionally, a charging plug is mounted on the centering limiting rod of the centering mechanism, and the charging plug can be connected to the charging interface of the UAV to charge the UAV even when the UAV is idle in the UAV hangar. Furthermore, due to the restraint of the centering mechanism, a tight and stable connection between the UAV and the charging plug can be ensured, thereby ensuring stable charging.

It should be noted that, in the accompanying drawings, the dimensions of the layers and regions may be exaggerated for clarity of illustration. Moreover, it will be understood that, in the case that an element or layer is referred to as being "on" another element or layer, it may be directly on the other element, or an intermediate layer may be present. In addition, it will be understood that, in the case that an element or layer is referred to as being "under" another element or layer, it may be directly under the other element, or one or more intermediate layers or elements may be present. In addition, it will be further understood that in the case that a layer or element is referred to as being "between" two layers or elements, it may be the only layer between the two layers or elements, or one or more other intermediate layers or elements may be present. Similar reference numerals refer to similar elements throughout the present disclosure.

In the present disclosure, the terms "first" and "second" are merely used for descriptive purposes and should not be construed as indicating or implying relative importance. The term "a plurality of" refers to two or more, unless otherwise explicitly defined.

Described above are merely optional embodiments of the present disclosure and are not intended to limit the present disclosure. Any modifications, equivalent substitutions, improvements, or the like, made within the concept and principle of the present disclosure should fall within the protection scope of the present disclosure.

## Claims

1. A battery assembly for an unmanned aerial vehicle (UAV), comprising: a housing, a panel, a charging interface, a power supply interface, and a pair of snap-fit structures, wherein
the panel is disposed at a first end of the housing, and the charging interface is disposed on the panel and is configured to be connected to a charging plug;
the power supply interface is disposed on the housing and on a side away from the panel;
the pair of snap-fit structures are disposed on opposite sides of the housing respectively, and are configured to form a detachable snap-fit connection with a battery compartment of the UAV.

2. The battery assembly according to claim 1, wherein each of the pair of snap-fit structures comprises an actuating portion, a connection portion, and a hook portion that are connected to each other in sequence, wherein the actuating portion is closer to the first end of the housing than the hook portion, and the actuating portion protrudes outward relative to the hook portion.

3. The battery assembly according to claim 2, wherein a pair of snap-fit blocking portions in a one-to-one positional correspondence with the hook portions of the pair of snap-fit structures are further disposed on the opposite sides of the housing, wherein each of the snap-fit blocking portions is disposed on an inner side of a corresponding hook portion, and in response to the pair of snap-fit structures being in a released state, the snap-fit blocking portions are spaced apart from the hook portions by a gap.

4. The battery assembly according to claim 1, wherein the housing comprises a protrusion abutting the panel, and the power supply interface is disposed on a surface of the protrusion away from the panel.

5. The battery assembly according to claim 1, wherein the housing is provided with a guide groove, the guide groove extending from the first end of the housing to a second end of the housing, wherein a guide opening of the guide groove is disposed at the second end of the housing, and the first end and the second end of the housing are opposite to each other.

6. The battery assembly according to claim 5, wherein the guide groove is disposed on a bottom surface of the housing, wherein the bottom surface is between the opposite sides of the housing, and the bottom surface is opposite to a surface where the power supply interface is located.

7. An unmanned aerial vehicle (UAV), comprising: a UAV body and the battery assembly according to any one of claims 1 to 6, wherein
a power receiving interface is disposed in the UAV body; and
a battery compartment is disposed in the UAV body, a recess being defined in each of two opposite inner walls of the battery compartment, and the recesses being in a one-to-one correspondence with the pair of snap-fit structures, such that the UAV battery assembly is detachably mounted to the UAV; wherein the power receiving interface is configured to mate with the power supply interface.

8. The UAV according to claim 7, wherein an abutment portion extends downward from a top wall of the battery compartment, the abutment portion is spaced apart from an entrance end of the battery compartment, and the power receiving interface is disposed on a surface of the abutment portion facing the entrance end.

9. The UAV according to claim 7 or 8, wherein a guide rib is disposed on a bottom surface of the battery compartment, wherein an extension direction of the guide rib is the same as an insertion direction of the battery assembly.

10. A charging system for an unmanned aerial vehicle (UAV), comprising: a landing pad and the UAV according to any one of claims 7 to 9, wherein the landing pad comprises a centering mechanism, the centering mechanism comprising a centering limiting rod and a charging plug, wherein the charging plug is mounted on the centering limiting rod and configured to dock with the charging interface where necessary.

11. The charging system according to claim 10, wherein the centering mechanism comprises four centering limiting rods that are arranged in pairs, the centering limiting rods in each pair being opposite to each other;
wherein in a direction perpendicular to the landing pad, two opposite centering limiting rods are at a same distance from the landing pad, and two adjacent centering limiting rods are at different distances from the landing pad.

12. The charging system according to claim 10, further comprising: a limiting mechanism configured to be detachably connected to the UAV.
